Europäisches Patentamt

European Patent Office

Office européen des brevets

(11) Veröffentlichungsnummer : **0 076 475**
**B1**

(12) EUROPÄISCHE PATENTSCHRIFT

(45) Veröffentlichungstag der Patentschrift :
30.12.86

(51) Int. Cl.⁴ : **B 62 D 63/06**, B 62 K 27/00

(21) Anmeldenummer : **82109054.5**

(22) Anmeldetag : **30.09.82**

(54) Zerlegbarer Mehrzweck-Kleinanhänger.

(30) Priorität : 02.10.81 DE 3139176

(43) Veröffentlichungstag der Anmeldung :
13.04.83 Patentblatt 83/15

(45) Bekanntmachung des Hinweises auf die Patenterteilung : 30.12.86 Patentblatt 86/52

(84) Benannte Vertragsstaaten :
AT BE DE FR IT NL SE

(56) Entgegenhaltungen :
CH-A-  264 175
CH-A-  308 729
DK-A-  140 167
FR-A-  837 476
FR-A- 1 058 745
FR-A- 2 082 107
FR-A- 2 371 333
FR-A- 2 381 642
GB-A- 2 015 934

(73) Patentinhaber : Poth, Klaus
Zusamstrasse 14
D-8900 Augsburg (DE)

(72) Erfinder : Poth, Klaus
Zusamstrasse 14
D-8900 Augsburg (DE)

(74) Vertreter : Munk, Ludwig, Dipl.-Ing.
Patentanwalt Prinzregentenstrasse 1
D-8900 Augsburg (DE)

**Beschreibung**

Die Erfindung betrifft einen Kleinwagen, insbesondere einen Anhänger für Zweiradfahrzeuge, der in einen Tisch umbaubar ist, wobei eine Ladebrücke, der zwei Räder und eine Deichsel abnehmbar zugeordnet sind, wahlweise ohne Räder und Deichsel als vorzugsweise selbsttragende Tischplatte auf vier Tischbeinen aufnehmbar ist.

Ein Fahrradanhänger dieser Art ist aus der CH-A 308 729 bekannt. Dieser bekannte Fahrradanhänger besteht aus einem, die Räder, die Deichsel und einen Tragrahmen für eine abnehmbare Brücke enthaltenden Fahrgestell und einem auf den Tragrahmen aufsteckbaren, eine umlaufende Bordwand bildenden Aufsetzrahmen. Der Umbau zu einem Tisch erfolgt dabei dadurch, daß die Ladebrücke und der die Bordwand bildende Aufsetzrahmen vom Fahrgestell abgenommen, der Aufsetzrahmen an seiner vorher dem Fahrgestell zugeordneten Unterseite auf vier Tischbeinen aufgenommen und die Brücke als Tischplatte auf die Oberseite des Aufsetzrahmens aufgelegt werden. Das Fahrgestell selbst findet bei dieser bekannten Anordnung beim Umbau in einen Tisch keine Verwendung. Dies wird als nachteilig empfunden, da somit eine fahrbare Einheit übrig bleibt, die einer hohen Entwendungsgefahr unterliegt. In diesem Zusammenhang ist nämlich davon auszugehen, daß Fahrzeuge hier vorliegender Art vielfach an unbeaufsichtigten Orten, wie beispielsweise an einem Badestrand etc. Verwendung finden. Außerdem führt die Verwendung eines eigenen, von der Ladebrücke getrennten Fahrgestells zu einer sehr schweren Ausführung, was sich ungünstig auf die Handhabung auswirkt. Ein weiterer Nachteil der bekannten Anordnung ist darin zu sehen, daß sich infolge der Aufnahme der Tischplatte auf einem bordwandartigen, d. h. eine bestimmte Höhe aufweisenden Rahmen eine hohe Sperrigkeit unterhalb der Tischplatte und damit praktisch eine ungenügende Beinfreiheit ergibt, was zu wenig Sitzkomfort führt. Außerdem werden hierbei zusätzliche Befestigungsorgane zur lösbaren Halterung der die Ladebrücke bzw. die Tischplatte bildenden Platte auf dem Fahrgestell bzw. auf dem bordwandartigen Aufsetzrahmen benötigt. Diese Befestigungsorgane stehen über die Ladebrücke bzw. die Tischplatte vor, was zu Verletzungen führen kann. Ein weiterer Nachteil der bekannten Anordnung ist auch noch darin zu sehen, daß hier unbedingt eine bordwandartige Umfassung der Ladebrücke benötigt wird und daß diese dann bereits für den Tischaufbau verbraucht wird und beispielsweise zur Erstellung einer Sitzgelegenheit nicht zur Verfügung steht.

Hiervon ausgehend ist es daher die Aufgabe der vorliegenden Erfindung, eine Anordnung eingangs erwähnter Art mit einfachen und kostengünstigen Mitteln so zu verbessern, daß bei der Verwendung als Tisch eine hohe Bequemlichkeit und Verletzungssicherheit erreicht werden und daß gleichzeitig ein einfacher Wagenaufbau und leichter Umbau gewährleistet sind.

Diese Aufgabe wird erfindungsgemäß dadurch gelöst, daß die Ladebrücke im Bereich ihrer Längskanten jeweils zwei quer zu diesen verlaufende, als Steckbüchsen ausgebildete Halterungen aufweist, die paarweise mit jeweils einem ein Rad aufnehmenden Aufhängerahmen mit jeweils zwei als Steckzapfen ausgebildeten Tragschenkeln oder einzeln mit/jeweils einem Tischbein mit jeweils einem als Steckzapfen ausgebildeten Tragschenkel zum Eingriff bringbar sind.

Hierbei werden die Räder direkt an der Ladebrücke aufgenommen. Dasselbe gilt für die Tischbeine. Es wird daher kein von der Ladebrücke bzw. Tischplatte separates Fahrgestell benötigt. Vielmehr bildet die hier als Tischplatte verwendbare Ladebrücke auch den zentralen Bereich des Fahrgestells, von dem die Deichsel und die Räder abnehmbar sind. Dies ergibt nicht nur einen besonders einfachen und leichten Aufbau des Wagens, sondern stellt gleichzeitig auch sicher, daß sich bei Verwendung als Tisch eine hohe Beinfreiheit und damit eine hohe Bequemlichkeit ergeben. Die im Bereich der Ladebrücke vorgesehenen Steckbüchsen lassen sich einfach so der Brückendicke anpassen, daß sie bündig in diese eingelassen werden können, so daß sich hierdurch keinerlei vorstehende Kanten ergeben, was eine hohe Verletzungssicherheit gewährleistet und die Bequemlichkeit bei der Benutzung als Tisch noch weiter erhöht. Gleichzeitig ergeben die paarweise vorgesehenen Steckbüchsen zusammen mit den ihnen zugeordneten Steckzapfen eine schnell und zuverlässig in Stellung bringbare Steckverbindung mit hoher Stabilität und damit hoher Standsicherheit des Tisches und Tragfähigkeit des Rahmens. Trotz der Abnehmbarkeit der Räder ergibt sich infolge der paarweisen Anordnung der Steckbüchsen und Steckzapfen in vorteilhafter Weise auch eine hohe Spurtreue des Wagens.

Da beim Umbau des erfindungsgemäßen Anhängers zu einem Tisch keine fahrbare Einheit mehr übrig bleibt, ergibt sich in vorteilhafter Weise auch eine hohe Diebstahlsicherheit. Ein weiterer Vorteil der erfindungsgemäßen Maßnahmen ist darin zu sehen, daß eine hier eventuell Verwendung findende Bordwand nicht nur Erstellung eines Tisches verbraucht wird und daher in vorteilhafter Weise für eine andere Verwendung, zweckmäßig in Form einer Sitzgelegenheit, zur Verfügung steht.

Eine vorteilhafte Fortbildung der übergeordneten Maßnahmen kann darin bestehen, daß die Rad-Aufhängerahmen neben ihren Steckzapfen jeweils mindestens einen im Bereich der Radachse angeordneten Paßstift aufweisen, der in ein ladebrückenseitig vorgesehenes Rastschloß einführbar ist. Diese Rastverbindung ergibt eine ausgezeichnete Lagesicherung der Rad-Aufhängerahmen und gewährleistet gleichzeitig eine hohe Wackel- bzw. Klappersicherheit. Die Anordnung des Paßstifts im Bereich der Radachse ergibt einen günstigen Kraftfluß. Insgesamt ermöglicht die vorliegende Rastverbindung die Verwendung von Normprofilen für die Steckbüchsen und die Steckzapfen, die besonders kostengünstige Konstruktionselemente darstellen, andererseits jedoch keine exakte Führung gewährleisten würden. Zur Bewerkstelligung eines sauberen, wackel- bzw. klapperfreien Sitzes der Steckzapfen der Tischfüße können zweckmäßig das Verschiebespiel zwischen Steckzapfen und jeweils zugeordneter Steckbüchse überbrückende Spannelemente vorgesehen sein.

Eine weitere besonders zu bevorzugende Fortbildung der übergeordneten Maßnahmen kann darin bestehen, daß in die Ladebrücke im Bereich ihrer vorderen Stirnseite ein der abnehmbaren Deichsel zugeordnetes Rastschloß eingesetzt ist, in das eine an der Deichsel befestigte Befestigungslasche einführbar ist. Diese Maßnahmen ergeben einen einfachen Rastverschluß und gestatten somit eine schnelle und einfache Montage bzw. Demontage der Deichsel. Die Befestigungslasche kann vorteilhaft verstellbar am unteren Endbereich der Deichsel festlegbar sein, was in vorteilhafter Weise einen Höhenausgleich gestattet, so daß die Ladebrücke unabhängung von der Höhe des zugeordneten Zugfahrzeugs im wesentlichen horizontal ausgerichtet werden kann.

Gemäß einer weiteren ganz besonders zu bevorzugenden Ausgestaltung der übergeordneten Maßnahmen kann auf die Ladebrücke eine umlaufende Bordwand aufsetzbar und lösbar hieran festlegbar sein, die aus zwei etwa U-förmigen, jeweils als Sitzbank mit einer Sitzfläche und zwei seitlichen Stützen ausgebildeten Elementen besteht, die in der an der Ladebrücke festgelegten Stellung mit ihren freien Schenkeln zusammenstoßen. Diese Maßnahmen ergeben in vorteilhafter Weise zwei dem Tisch zuzuordnende Sitzbänke, ohne daß hierfür zusätzliche Teile mitgeführt werden müßten. Die Bordwand erfüllt daher hierbei ebenso wie die Ladebrücke eine Doppelfunktion.

Weitere vorteilhafte Ausgestaltungen und zu bevorzugende Weiterbildungen der übergeordneten Maßnahmen ergeben sich aus der nachstehenden Beschreibung einiger Ausführungsbeispiele anhand der Zeichnung in Verbindung mit den restlichen Unteransprüchen.

In der Zeichnung zeigen :

Figur 1 eine Seitenansicht eines erfindungsgemäßen Zweiradanhängers in fahrbereitem Zustand,

Figur 2 eine Draufsicht auf den Anhänger nach Figur 1,

Figur 3 eine Seitenansicht der Radaufhängung gemäß Figur 1 und 2 in vergrößertem Maßstab,

Figur 4 eine Vorderansicht der erfindungsgemäßen Anordnung in der als Tisch dienenden Benutzungsform,

Figur 5 eine Seitenansicht des Tisches gemäß Figur 4,

Figur 6 eine Ansicht des der Deichsel zugeordneten Rastschlosses,

Figur 7 eine Draußicht auf das deichselseitige Rastelement,

Figur 8 eine Draufsicht auf einen mit einer umlaufenden, durch zwei Sitzbänke gebildeten Bordwand und

Figur 9 eine Ansicht einer derartigen Sitzbank.

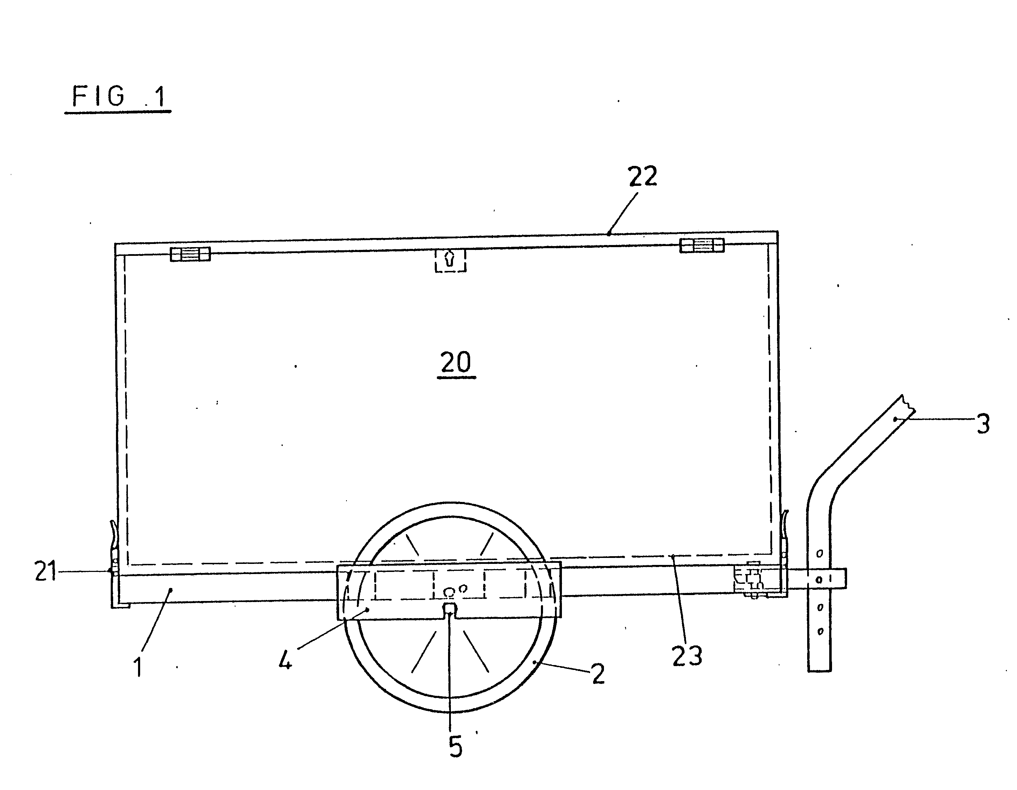

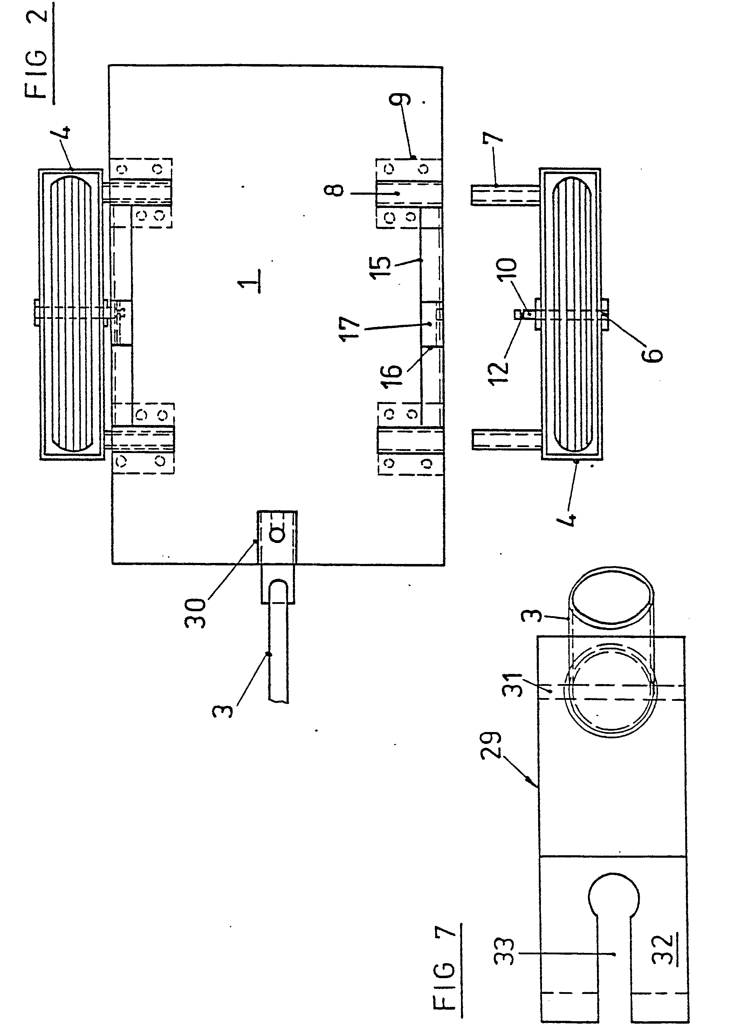

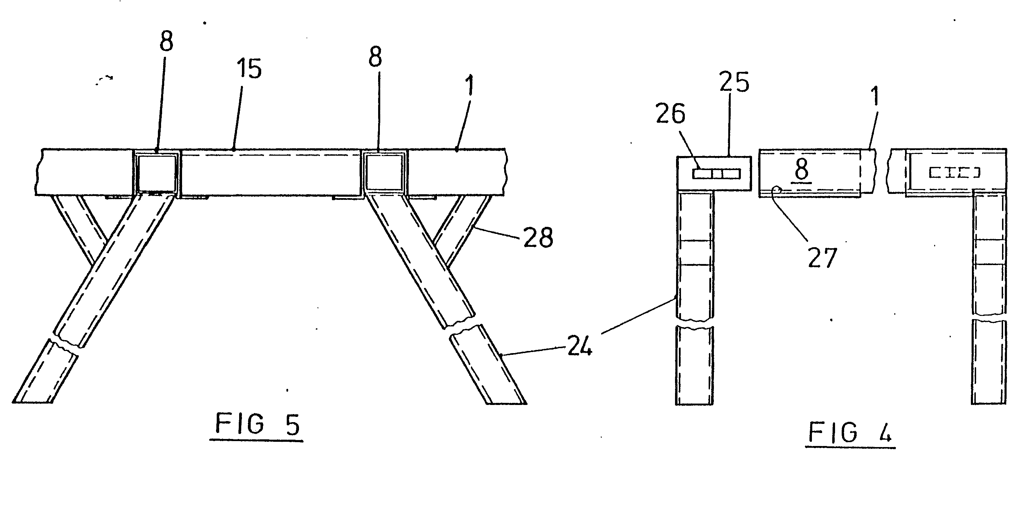

Der in Figur 1 dargestellte Wagen besteht aus einer Ladebrücke 1, die auf zwei Rädern 2 aufgenommen und mit einer Anhängedeichsel 3 versehen ist. Die Anhängedeichsel 3 ist im Bereich ihres oberen Endes mit einer hier nicht näher dargestellten Anhängekupplung versehen. Der Wagen ist zerlegbar. Im zerlegten Zustand soll die Ladebrücke 1 als Tischplatte Verwendung finden, die auf anstelle der Räder 2 hieran festlegbaren Tischfüßen abgestützt ist, wie die Figur 4 und 5 anschaulich erkennen lassen.

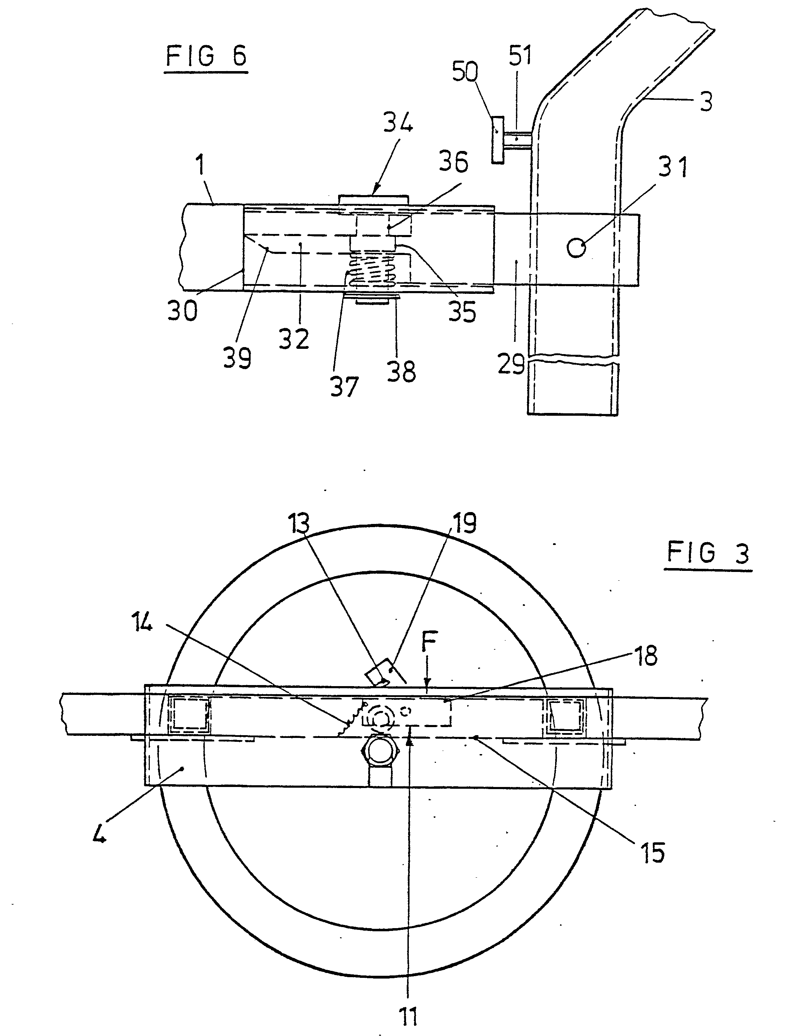

Die Räder 2 sind einzeln aufgehängt. Hierzu sind den Rädern 2 sie umfassende Aufhängerahmen 4 zugeordnet, die mit einer Aufnahmekerbe 5 für die Achse 6 des jeweils zugeordneten Rads versehen sind. Zur Fixierung der Radachsen sind Spannschrauben vorgesehen. Die Rad-Aufhängerahmen 4 sind an der Ladebrücke abnehmbar festgelegt. Hierzu sind die Aufhängerahmen 4 mit als Steckzapfen ausgebildeten Tragschenkeln 7 versehen, die in zugeordnete, ladebrückenseitig vorgesehene, als Steckbüchsen ausgebildete Halterungen 8 einsteckbar sind. In Figur 2 oben befinden sich die Tragschenkel 7 im Eingriff mit den jeweils zugeordneten Steckbüchsen 8. In Figur 2 unten ist der Demontagezustand angedeutet. Die Steckbüchsen 8, die einfach als Rohrabschnitte ausgebildet sein können, sind in die Ladebrücke 1 so eingelassen, daß sich im Bereich der Ladefläche keine vorstehenden Kanten ergeben. Zweckmäßig entspricht die Dicke der Ladebrücke 1 etwa dem Kantenmaß der einfach als Rohrabschnitte ausgebildeten Steckbüchsen 8, so daß sich auch im Bereich der Ladebrückenunterseite keine vorstehenden Kanten ergeben, was bei Verwendung als Tischplatte sehr erwünscht sein kann. Im dargestellten Ausführungsbeispiel sind die in die Ladebrücke 1 eingelassenen Steckbüchsen mit seitlichen Leisten 9 versehen, die zur Gewährleistung eines ausreichenden Halts mit der Ladebrücke 1 verschraubt sind. Im dargestellten Ausführungsbeispiel ist jeder Aufhängerahmen 4 mit jeweils zwei Tragschenkeln 7 versehen, denen ladebrückenseitig zwei Steckbüchsen 8 zugeordnet sind, was eine hohe Stabilität ergibt.

Zur Sicherung der Aufhängerahmen 4 in der fahrbereiten Stellung sind diese mit jeweils einem Paßstift 10 versehen, der in eine zugeordnete Bohrung eines ladebrückenseitig vorgesehenen Beschlags einfürbar ist und mit einem Rastschloß in Eingriff bringbar ist. Dieses Rastschloß ist im dargestellten Ausführungsbeispiel, wie Figur 3 weiter erkennen läßt, als schwenkbarer Riegel 11 ausgebildet, der in eine zugeordnete Nut 12 des Paßstifts 10 einrastbar ist. Zur Bildung des Riegels 11 ist hier eine schwenkbare Lasche vorgesehen, die mit einer der Nut 12 zugeordneten Rastkerbe 13 versehen ist und mittels einer Feder 14 in Eingriffsstellung gehalten wird.

Die den Riegel 11 bildende Lasche ist ladebrückenseitig auf einer Schiene 15 gelagert, welche die im Bereich einer Brückenlängsseite jeweils vorgesehenen Steckbüchsen 8 miteinander verbindet, so daß der im Bereich jeder Ladebrückenseite anzubringende Beschlag ein einteiliges Bauteil bildet, was die Montage dieses Beschlags sehr erleichtert. Die Schiene 15 ist wie die Steckbüchsen 8 in die Ladebrücke 1 eingelassen. Im dargestellten Ausführungsbeispiel ist die Schiene 15 einfach als Winkeleisen ausgebildet, die im Bereich der Ladefläche und der Ladeflächenkante bündig mit der Ladebrücke 1 abschließt. Der obere Schenkel der Schiene 15 ist mit einer Ausnehmung 16 versehen, in die eine Betätigungslasche 17 des Riegels 11 bündig eingreift, wie Figur 2 zeigt. Der Riegel 11 ist daher zweckmäßig ebenfalls als Abschnitt einer Winkelschiene ausgebildet. Die Raststellung des Riegels 11 ist, wie Figur 3 weiter erkennen läßt, durch einen Anschlag 18 definiert. Hierzu ist die lotrecht zur Betätigungslasche 17 verlaufende Eingriffslasche 19 des Riegels 11 einfach etwas länger als die der Betätigungslasche 17 zugeordnete Ausnehmung der Schiene 15 ausgebildet. Hierdurch ist sichergestellt, daß der Riegel 11 auch bei abgenommenem Rad-Aufhängerahmen nicht über die Laderfläche und damit auch nicht über die Tischfläche hochschwenken kann.

Die als Steckbüchsen ausgebildeten Halterungen 8 dienen zur wahlweisen Festlegung der Rad-Aufhängerahmen 4 bzw., wie die Figur 4 und 5 zeigen, von Tischfüßen 24, die mit entsprechenden Steckzapfen 25 versehen sind. Zur Bewerkstelligung eines strammen Sitzes der Steckzapfen 25 in den zugeordneten Steckbüchsen und damit zur Bewerkstelligung einer guten Standsicherheit des so zu erstellenden Tisches sind im Bereich der Steckzapfen 25 gekröpfte Federelemente 26 vorgesehen, welche das Verschiebespiel zwischen den Steckzapfen 25 und den jeweils zugeordneten Steckbüchsen überbrücken und dennoch eine leichte Handhabung der Tischfüße ermöglichen. Die Steckzapfen 25 sind auf den jeweils zugeordneten Tischfuß 24 seitlich auskragend aufgesetzt und soweit in die jeweils zugeordnete Steckbüchse einsteckbar, daß die Tischfüße 24 nicht über die Grundfläche der nun als Tischplatte verwendeten Ladebrücke 1 vorstehen. Im dargestellten Ausführungsbeispiel sind die Steckbüchsen hierzu einfach im Bereich ihrer unteren Wandung mit einem zur Aufnahme des jeweils zugeordneten Tischfußes 24 geeigneten Schlitz 27 versehen. Jeder der vier als Steckbüchsen ausgebildeten Halterungen 8 ist ein Tischfuß 24 zugeordnet, so daß der mit Hilfe der Tischplatte 1 zu erstellende Tisch auf vier Füßen ruht. Zur Vergrößerung der Standfläche können die Tischfüße 24, wie am besten aus Figur 5 erkennbar ist, schräg ausgestellt sein. Zur Stabilisierung der als Tischplatte verwendeten Ladebrücke sind die Tischfüße 24 im dargestellten Ausführungsbeispiel mit seitlich auskragenden Winkelstützen 28 versehen, die eine zusätzliche Tischplattenauflage mit ergeben, wie Figur 5 zeigt.

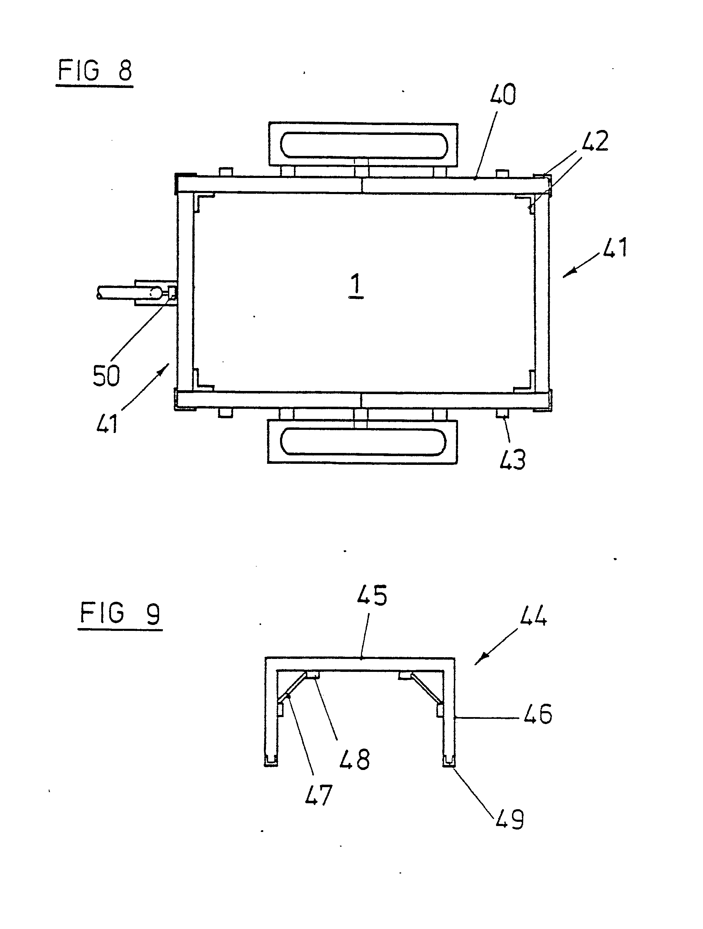

Die Anhängedeichsel 3 ist ebenso wie die Rad-Aufhängerahmen 4 abnehmbar ausgebildet. Hierzu ist die Anhängedeichsel 3, wie in Figur 2 angedeutet ist, mittels einer Steckverbindung an der Ladebrücke 1 festlegbar. Die Steckverbindung besteht, wie am besten aus Figur 6 erkennbar ist, aus einer deichselseitigen Befestigungslasche 29, die in eine ladebrückenseitig vorgesehene Büchse 30 einsteckbar ist. Die Befestigungslasche 29 ist mittels eines Bolzens 31 an der durch ein Rohr oder dergleichen gebildeten Deichsel 3 festgelegt, die zur Gewährleistung einer unterschiedlichen Höheneinstellung mit mehreren zugeordneten Bohrungen versehen sein kann. Die Befestigungslasche 29 ist mit einer Zunge 32 versehen, die, wie Figur 7 zeigt, mit einer pilzförmigen Rastausnehmung versehen ist, in die zur Sicherung der Deichsel 3 ein auf der Büchse 30 aufgenommener Stift 34 einrastbar ist, der einen dem Kopf der pilzförmigen Ausnehmung 33 zugeordneten Bund 35 und einen dem zum Kopf der Ausnehmung 33 führenden Schlitz zugeordneten Kragen 36 aufweist. Der Stift 34 ist in axialer Richtung bewegbar gelagert und mittels einer am Bund 35 abgestützten Feder 37 vorgespannt. Die der Figur 6 zugrunde liegende Raststellung, in welcher der Bund 35 in die kreisförmige Erweiterung der Rastausnehmung 33 der Zunge 32 eingreift, ist durch einen Anschlag 38 definiert. Zum Lösen der Deichsel 3 wird der Stift 34 entgegen der Kraft der Feder 37 so weit niedergedrückt, daß der Kragen 36 auf die Höhe der Rastausnehmung 33 gelangt, womit die Verriegelung aufgehoben wird und die Befestigungslasche 29 über den zum Kopf der pilzförmigen Rastausnehmung 33 führenden Schlitz außer Eingriff mit dem Stift 34 bringbar ist. Die Zunge 32 ist im Bereich ihrer vorderen Stirnseite mit einer Anlaufschräge 39 versehen, die beim Einführen der Befestigungslasche 29 in die zugeordnete Büchse 30 auf den stiftseitigen Bund 35 aufläuft und den Stift 34 somit automatisch niederdrückt, so daß der Kragen 36 zum Eingriff mit der Rastausnehmung 33 kommt. Beim Erreichen der Raststellung schnappt der Bund 35 unter der Wirkung der Feder 37 automatisch in die den Kopf der pilzförmigen Rastausnehmung 33 bildende kreisförmige Erweiterung des Schlitzes ein. Die der Deichsel 3 zugeordnete Büchse 30 ist ebenso wie die den Rädern bzw. Tischfüßen zugeordneten Beschläge in die Ladebrücke 1 eingelassen. Bei dem der Figur 6 zugrunde liegenden Beispiel ist die Deichsel 3 oberhalb der Befestigungslasche 29 mit einem verstellbaren Spannelement versehen, mittels dessen die Deichsel 3 gegenüber der Ladebrücke 1 bzw. einem Ladebrückenaufbau, wie einer Bordwand, wie Figur 8 zeigt, verspannbar ist, so daß sich ein vollkommen wackel- und klappersicherer Halt auch dann ergibt, wenn die Befestigungslasche 29 gegenüber der Büchse 30 größeres Verschiebeispiel, was den Einsteckvorgang erleichtert. Das Spannelement besteht hier aus einem Gummipuffer 50, der an einer in die Deichsel 3 eingreifenden Schraube 51 befestigt und hiermit verstellbar ist.

Die als Tischplatte verwendbare Ladebrücke 1 ist als selbsttragende, hier aus Sperrholz bestehende Platte ausgebildet, in welche die Beschläge zur Aufnahme der Rad-Aufhängerahmen 4 bzw. der Tischfüße so eingelassen sind, daß sich eine glatte Ladefläche bzw. Tischfläche ergibt. Die Ladebrücke 1 kann mit einer umlaufenden, ab-nehmbaren Bordwand versehen oder bordwand-los ausgebildet sein. Im Falle einer bordwandlosen Ausführung kann zur Aufnahme von zu transportierenden Gegenständen, wie Figur 1 zeigt, ein Koffer 20 vorgesehen sein, der durch Kniehebelverschlüsse 21 an der Ladebrücke 1 lösbar festlegbar ist.

Der Koffer 20 ist mittels eines verschließbaren Klappdeckels 22 abgedeckt und mit einem eigenen Boden 23 versehen, so daß er leicht von der Ladebrücke 1 abgenommen und in abgenommenem Zustand ebenfalls verwendbar ist. Die Größe des Koffers 20 ist so bemessen, daß die Räder 2 samt zugehörigen Aufhängerahmen 4 und vorzugsweise auch die Deichsel 3, die etwa abknickbar ausgebildet sein kann, hierin verstaut werden können. Zur Erleichterung einer geordneten Unterbringung können im Koffer geeignete, etwa als Schnallen oder dergleichen ausgebildete Haltemittel zur Befestigung der hierin zu verstauenden Wagenteile vorgesehen sein. Der Koffer 20 soll im dargestellten Ausführungsbeispiel etwas schmäler als die Ladebrücke 1 ausgebildet sein. Hierdurch ergibt sich seitlich des Koffers 20 Stauraum zur Unterbringung von nicht im Koffer 20 verstaubaren, zu transportierenden Gegenständen. Zur Halterung derartiger Gegenstände können im Bereich der Kofferseitenflächen ebenfalls geeignete Haltemittel vorgesehen sein.

Bei der der Figur 8 zugrunde liegenden Ausführung ist auf die Ladebrücke 1 eine umlaufende, als Ganzes mit 40 bezeichnete Bordwand aufgesetzt.

Diese besteht aus zwei in der Draufsicht etwa U-förmigen Elementen 41, die mit den Enden ihrer seitlichen Schenkel im Bereich der Fahrzeugmitte bündig zusammenstoßen. Die Elemente 41 sind identisch ausgebildet, was die Anbringung erleichtert. Die Stoßfuge kann im Bereich der Fahrzeugmittellängsebene oder, wie im dargestellten bevorzugten Ausführungsbeispiel, im Bereich der Fahrzeugmittelquerebene verlaufen. Die U-förmigen Elemente 41 können als einteilige Preßformlinge ausgebildet sein. Im dargestellten Ausführungsbeispiel bestehen diese Elemente 41 jeweils aus drei rechtwinklig aneinander angesetzten, im Stoßbereich auf Gehrung geschnittenen oder stumpf zusammenstoßenden Brettern, die durch den Stoßbereich überbrückende Verbindungswinkel 42 fest miteinander verbunden sind. Zur lösbaren Festlegung der Bordwand 40 bzw. der Elemente 41 an der Ladebrücke 1 sind hier Kniehebelspanner 43 vorgesehen.

Im abgenommenen Zustand bilden die U-förmigen Elemente 41, wie am besten aus Figur 9 erkennbar ist, jeweils eine als Ganzes mit 44 bezeichnete Sitzbank mit einer horizontalen Sitzfläche 45 und seitlichen Stützen 46. Zur Stabilisierung sind hier Eckversteifungsstreben 47 vorgesehen, die an geeigneten Haltern 48 lösbar festlegbar sind. Die unteren Enden der Stützen 46 sind mit Schutzkanten 49 beschlagen, was sich vorteilhaft auf die Standsicherheit und auf die Lebensdauer auswirkt.

Die als Tischplatte verwendbare Ladebrücke 1 kann, wie weiter oben bereits angedeutet wurde, als massive Sperrholzplatte ausgebildet sein, die den hieran festlegbaren Beschlägen zur Aufnahme der Räder 2 bzw. der Tischfüße 24 und der Deichsel 3, also den Halterungen 8 samt Verbindungsschiene 15 und der deichselseitigen Büchse 30 zugeordnete Ausschnitte bzw. Ausfräsungen aufweist, in welche die Beschläge bzw. deren seitliche Befestigungslaschen bündig mit der Ober- bzw. Unterfläche der Ladebrücke eingesetzt bzw. eingelassen und durch Schrauben hieran festlegbar sind. Dies ermöglicht einen leichten Austausch der Beschläge. Zur Einsparung von Baugewicht wäre es aber auch möglich, die als Tischplatte verwendbare Ladebrücke 1 als Leichtbauplatte auszubilden, die einen aus Hartschaum, z. B. PUR-Schaum bestehenden Kern aufweist, der von äußeren, vorzugsweise aus dünnen Aluminiumblechen bzw. -folien bestehenden Schalenelementen umfaßt ist. Die Beschläge zur Aufnahme der Räder bzw. der Tischfüße und der Deichsel sowie zur Halterung des Koffers 20 bzw. der Bordwand 40 können hierbei in vorteilhafter Weise direkt eingeschäumt sein, so daß eine nachträgliche Montage entfällt. Die Bordwandelemente 41 können ebenfalls als jeweils einstückig ausgeführte Leichtbauteile mit einem geschäumten Kern und äußeren Schalenelementen ausgebildet sein, was eine hohe Stabilität erwarten läßt. In manchen Fällen kann es aber auch zweckmäßig sein, die U-förmigen Elemente 41 im Bereich der Ecken mit Scharnieren zu versehen, so daß die seitlichen Schenkel umgeklappt werden können, was sich als besonders platzsparend für den Fall erweist, daß Sitzbänke nicht benötigt werden. Anstelle der über Eck gesetzten Versteifungsstreben 47 könnten auch einfache Querstreben vorgesehen sein, die durch eine Stange gebildet werden, die im Bereich ihrer Enden mit quer verlaufenden Schlitzen versehen ist, in welche der Steg zugeordneter, U-förmiger Halteelemente eingreift. Im Falle einer Verspannung der Deichsel 3 an der Bordwand 40 mittels des Gummipuffers 50 ist es besonders zweckmäßig, wenn die Bordwand 40 entlang einer Fahrzeugmittelquerebene geteilt ist, so daß sich eine ungeteilte und daher stabile vordere Bordwand ergibt.

**Patentansprüche**

1. Kleinwagen, insbesondere Anhänger für Zweiradfahrzeuge, der in einen Tisch umbaubar ist, wobei eine Ladebrücke (1), der zwei Räder (2) und eine Deichsel (3) abnehmbar zugeordnet sind, wahlweise ohne Räder (2) und Deichsel (3) als vorzugsweise selbsttragende Tischplatte auf vier Tischbeinen (24) aufnehmbar ist, dadurch gekennzeichnet, daß die Ladebrücke (1) im Bereich ihrer Längskanten jeweils zwei quer zu diesen verlaufende, als Steckbüchsen ausgebildete Halterungen (8) aufweist, die paarweise mit jeweils einem ein Rad (2) aufnehmenden Aufhängerahmen (4) mit jeweils zwei als Steckzapfen ausgebildeten Tragschenkeln (7) oder einzeln mit jeweils einem Tischbein (24) mit jeweils einem als Steckzapfen ausgebildeten Tragschenkel (25) zum Eingriff bringbar sind.

2. Kleinwagen nach Anspruch 1, dadurch gekennzeichnet, daß die die Halterungen (8) bildenden, vorzugsweise einen rechteckigen Querschnitt aufweisenden und in die Ladebrücke (1) eingelassenen, die Halterungen (8) bildenden Steckbüchsen mit seitlichen, vorzugsweise ebenfalls in die Ladebrücke (1) eingelassenen Halteleisten (9) versehen und hiermit an der Ladebrücke (1) festlegbar sind.

3. Kleinwagen nach einem der vorhergehenden Ansprüche, dadurch gekennzeichnet, daß die Rad-Aufhängerahmen (4) neben ihren Tragschenkeln (7) jeweils mindestens einen im Bereich der Radachse (6) angeordneten Paßstift (10) aufweisen, der in ein brückenseitig vorgesehenes Rastschloß einführbar ist, das vorzugsweise als Riegel (11) ausgebildet ist, der schwenkbar gelagert und entgegen der Kraft einer Feder (14) von Hand betätigbar ist und eine Ausnehmung aufweist, die zum Eingriff mit dem eine zugeordnete Nut (12) aufweisenden Paßstift (10) bringbar ist.

4. Kleinwagen nach einem der vorhergehenden Ansprüche, dadurch gekennzeichnet, daß die jeweils im Bereich einer Längsseite der Ladebrücke (1) vorgesehenen Halterungen (8) durch eine in die Ladebrücke (1) eingelassene Verbindungsschiene (15) miteinander verbunden sind, die mit einer dem Paßstift (10) zugeordneten Ausnehmung versehen ist und auf der der mit einem zugeordneten Anschlag (18) zusammenwirkende Riegel (11) aufgenommen ist, der vorzugsweise eine Betätigungslasche (17) aufweist, die in eine im Bereich der Oberseite der Verbindungsschiene (15) vorgesehene Ausnehmung (16) bündig eingepaßt ist.

5. Kleinwagen nach einem der vorhergehenden Ansprüche, dadurch gekennzeichnet, daß im Bereich der Tragschenkel (25) der Tischfüße (24) Spannelemente (26) vorgesehen sind, welche das Verschiebespiel zwischen den Tragschenkeln (25) und den zugeordneten Halterungen (8) überbrücken.

6. Kleinwagen nach einem der vorhergehenden Ansprüche, dadurch gekennzeichnet, daß in die Ladebrücke (1) im Bereich ihrer vorderen Stirnseite ein der abnehmbaren Deichsel (3) zugeordnetes Rastschloß eingesetzt ist, in das eine Befestigungslasche (29, 32) einführbar ist, die vorzugsweise verstellbar am unteren Endbereich der Deichsel (3) befestigt ist.

7. Kleinwagen nach Anspruch 6, dadurch gekennzeichnet, daß das Rastschloß als Büchse (30) ausgebildet ist, die mit einem in eine etwa pilzförmige Rastausnehmung (33) der vorzugsweise vorne eine Anlaufschräge (39) aufweisenden Befestigungslasche (29, 32) eingreifenden Stift (34) versehen ist, der von Hand entgegen der Kraft einer Feder (37) von einem Anschlag (38) abhebbar ist und einen querschnittsmäßig dem Kopf der Rastausnehmung (33) angepaßten, vorzugsweise die Feder (37) abstützenden Bund (35) und einen querschnittsmäßig dem zum Kopf führenden Schlitz der Rastausnehmung (33) angepaßten Kragen (36) aufweist.

8. Kleinwagen nach einem der vorhergehenden Ansprüche, dadurch gekennzeichnet, daß auf die Ladebrücke (1) eine umlaufende Bordwand (40) aufsetzbar und lösbar hieran festlegbar ist, die aus zwei etwa U-förmigen, jeweils als Stizbank (44) mit einer Sitzfläche (45) und zwei seitlichen Stützen (46) ausgebildeten Elementen (41) besteht, die in der an der Ladebrücke (1) festgelegten Stellung mit ihren freien, vorzugsweise mit einem Schutzbeschlag (49) versehenen Schenkelenden zusammenstoßen.

9. Kleinwagen nach einem der vorhergehenden Ansprüche 1 bis 7 mit einer bordwandlosen Ladebrücke, dadurch gekennzeichnet, daß auf der Ladebrücke (1) ein Koffer (20) lösbar festlegbar ist, dessen Grundfläche kleiner als die Grundfläche der Ladebrücke (1) ist.

10. Kleinwagen nach einem der vorhergehenden Ansprüche, dadurch gekennzeichnet, daß die Ladebrücke (1) als Leichtbauplatte mit einem zwischen äußeren Schalenflächen vorgesehenen, geschäumten Kern ausgebildet ist, in die sämtliche Beschläge eingeschäumt sind.

**Claims**

1. A small carriage, in particular a trailer for two-wheeled vehicles, which can be converted into a table whereby a loading bridge (1) with which two wheels (2) and a pole (3) removably cooperate can be accommodated on four table legs (24) preferably as self-supporting table plate and optionally without wheels (2) and pole (3), characterized in that the loading bridge (1), at its long sides and running at right angles thereto, has two mountings (8) each which are in the form of sleeves and can be made to engage in pairs each with a mounting frame (4) accommodating a wheel (2) and having each two supporting arms (7) in the form of pins, or in singles each with a table leg (24) having each a supporting arm (25) in the form of a pin.

2. A small carriage as claimed in claim 1 characterized in that the sleeves which form the mountings (8) preferably are of rectangular cross-section, and are embedded in the loading bridge (1), have lateral retaining strips (9) which preferably are also embedded in the loading bridge (1), and by means of which the said sleeves can be fixed to the loading bridge (1).

3. A small carriage as claimed in anyone of the preceding claims characterized in that the wheel-mounting frames (4), besides their supporting arms (7), have each at least one set pin (10) which is located at the wheel axle (6) and can be inserted into a stop lock of the loading bridge (1) preferably in the form of a swivelling bolt (11) which can be actuated by hand against the tension of a spring (14) and has a recess for engagement with the set pin (10) provided with a cooperating groove (12).

4. A small carriage as claimed in anyone of the preceding claims characterized in that the mountings (8), each at a long side of the loading bridge (1), are connected with each other by means of a connecting band (15) embedded in the loading bridge (1), said connecting band (15) having a recess cooperating with the set pin (10) and accommodating the bolt (11) which cooperates with a respective stop (18) and preferably has an actuating strap (17) flushly inserted in a recess (16) on the upper side of the connecting band (15).

5. A small carriage as claimed in anyone of the preceding claims characterized in that, at the supporting arms (25) of the table legs (24), there are tightening elements (26) bridging the shifting clearance between the support arm (25) and the cooperating mountings (8).

6. A small carriage as claimed in anyone of the preceding claims characterized in that, set in the front face of the loading bridge (1), there is a stop lock which cooperates with the detachable pole (3) and into which can be inserted a fitting plate (29, 32) fixed to the lower end of the pole (3) preferably such that it can be adjusted.

7. A small carriage as claimed in claim 6 characterized in that the stop lock is in the form of a sleeve (30) with a pin (34) which engages with an approximately mushroom-like recess (33) of the fitting plate (29, 32), has, preferably in front, a starting slope (39), can be lifted from a stop (38) by hand against the tension of a spring (37), and has a collar (35) with the cross-section adapted to the head of the recess (33) and preferably supporting the spring (37), as well as a collet (36) with the cross-section adapted to the slot of the recess (33) leading to the head.

8. A small carriage as claimed in anyone of the preceding claims characterized in that a surrounding side and tail board (40) can be put onto the loading bridge (1) and detachably fixed thereto, said board (40) consisting of two approximately U-shaped elements (41) which are each in the form of a bench (44) with a seat (45) and two lateral supports (46), and of which the free ends preferably provided with a protective fitting touch each other in the position fixed to the loading bridge (1).

9. A small carriage as claimed in anyone of the preceding claims 1 to 7 without side and tail boards (40) characterized in that a trunk (20) can be detachably fixed to the loading bridge (1), of which the surface area is smaller than the surface area of the loading bridge (1).

10. A small carriage as claimed in anyone of the preceding claims characterized in that the loading bridge (1) is in the ·form of a light construction material with a foamed core between outer shells and with all fittings being foamed into the said material.

**Revendications**

1. Petite remorque, c'est-à-dire, en particulier, une remorque pour des véhicules à deux roues, susceptible d'être transformée en une table, de manière qu'une plate-forme (1), à laquelle s'associent deux roues (2) et un timon (3) démontables, peut, au choix sans roues (2) ni timon (3), faire office de dessus de table autoportant ou non, porté par quatre pieds de table (24), caractérisée en ce que ladite plate-forme (1) présente, au niveau de chacun de ses côtés longitudinaux, des dispositifs de support (8) transversaux par rapport à ces derniers, exécutés sous forme de douilles et susceptibles de coopérer soit deux à deux avec un cadre de suspension (4) portant une roue (2) et muni de deux bras de support (7) exécutés sous forme d'éléments enfichables, soit individuellement avec un pied de table (24), muni d'un bras de support (25) exécuté sous forme d'élément enfichable.

2. Petite remorque selon la revendication 1, caractérisée en ce que lesdites douilles (8) formant les susdits dispositifs de support (8), présentant une section transversale de préférence rectangulaire et noyées dans la plate-forme (1), sont munies de nervures (9) de préférence également noyées dans la plate-forme (1) et servant à les immobiliser par rapport à cette dernière.

3. Petite remorque selon l'une ou l'autre des revendications précédentes 1 et 2, caractérisée en ce que lesdits cadres de suspension de roue (4) sont munis, à côté de leurs bras de support (5), d'au moins un ergot d'ajustage (10) disposé au niveau de l'essieu de roue (6) et susceptible d'être inséré dans un dispositif de verrouillage à encrantement, exécuté de préférence sous forme d'un verrou pivotant (11), susceptible d'être commandé par voie manuelle à l'encontre de l'effort exercé par un ressort (14) et présentant une encoche coopérant avec ledit ergot (10), muni à cet effet d'une rainure correspondante (12).

4. Petite remorque selon l'une ou l'autre des revendications précédentes 1-3, caractérisée en ce que lesdits dispositifs de support ou douilles (8), prévus à chacun des côtés longitudinaux de la plate-forme (1), sont reliés entre eux au moyen d'un rail de liaison (15), noyé dans la plate-forme (1) et muni d'une encoche coopérant avec ledit ergot (10), portant ledit verrou (11) coopérant avec un arrêt correspondant (18), et muni de préférence d'une languette de commande (17), s'ajustant étroitement dans une échancrure (16) prévue au niveau du côté supérieur dudit rail de liaison (15).

5. Petite remorque selon l'une ou l'autre des revendications précédentes 1-4, caractérisée en ce qu'au niveau des bras de support (25) des pieds de table (24) sont prévus des moyens de serrage (26) enjambant le jeu de glissement entre ces bras de support (25) et les dispositifs de fixation (8).

6. Petite remorque selon l'une ou l'autre des revendications précédentes 1-5, caractérisée en ce que dans ladite plate-forme (1) est, au niveau de sa face frontale antérieure, disposé un dispositif de verrouillage par encrantement correspondant audit timon démontable (3), où peut s'insérer une éclisse ou languette de fixation (29, 30), fixée, de préférence de manière réglable, à l'extrémité inférieure dudit timon (3).

7. Petite remorque selon la revendication 6, caractérisée en ce que ledit dispositif de verrouillage par encrantement est exécuté sous forme de douille (30), munie d'un ergot (34) prenant dans une encoche profilée en forme de champignon (33) d'une languette de fixation (29, 32), qui est de préférence biseautée à son bout antérieur (39), cet ergot (34) étant susceptible d'être écarté par intervention manuelle d'une butée (38) à l'encontre de l'effort exercé par un ressort (37), et présentant un rebord (35), adapté par son profil transversal à la tête de ladite encoche (33) et servant de préférence d'appui pour ce ressort (37), et un collet (36) adapté par son profil transversal à la rainure de l'encoche (36) conduisant à ladite tête.

8. Petite remorque selon l'une ou l'autre des revendications précédentes 1-7, caractérisée en ce qu'une ridelle périphérique (40) peut être disposée sur la plate-forme (1) et y être fixée de manière démontable, ridelle qui se compose de deux éléments (41) profilés à peu près en U, exécutés en forme de banc (44) à siège (45) et deux appuis latéraux (46) et butant l'un contre l'autre dans leur position immobilisée par rapport à la plate-forme (1), avec les bouts de leurs bras, qui sont de préférence munis d'une garniture de protection (49).

9. Petite remorque selon l'une ou l'autre des revendications 1-7, dont la plate-forme (1) est dépourvue de ridelle, caractérisée en ce que sur la plate-forme (1) peut être fixé de manière démontable un coffre (20), dont la base est plus petite que celle de la plate-forme (1).

10. Petite remorque selon l'une ou l'autre des revendications précédentes 1-9, caractérisée en ce que ladite plate-forme (1) est exécutée sous forme d'une plaque de construction légère, composée d'une âme d'une matière cellulaire, disposée entre des couches de protection extérieures et contenant toutes les garnitures y noyées et enrobées au stade de formation de la matière cellulaire du processus de fabrication.

FIG 1

FIG 2

FIG 7

0 076 475

0 076 475

FIG 6

FIG 3

FIG 5

FIG 4

FIG 8

40

42

41

1

50

41

43

FIG 9

45

44

46

48

47

49

5